(19) Europäisches Patentamt
European Patent Office
Office européen des brevets

(11) **EP 2 839 312 B1**

(12) **EUROPÄISCHE PATENTSCHRIFT**

(45) Veröffentlichungstag und Bekanntmachung des Hinweises auf die Patenterteilung:
**26.09.2018  Patentblatt 2018/39**

(21) Anmeldenummer: **13722974.6**

(22) Anmeldetag: **22.03.2013**

(51) Int Cl.:
*G01S 7/48* *(2006.01)*       *F41H 11/02* *(2006.01)*
*F41G 3/14* *(2006.01)*       *G01J 3/00* *(2006.01)*
*H01L 23/00* *(2006.01)*      *G01S 7/495* *(2006.01)*

(86) Internationale Anmeldenummer:
**PCT/DE2013/000161**

(87) Internationale Veröffentlichungsnummer:
**WO 2013/156013 (24.10.2013 Gazette 2013/43)**

(54) **OPTISCHE SENSORANORDNUNG**

OPTICAL SENSOR ARRANGEMENT

DISPOSITIF DE DETECTION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2012  DE 102012007677**

(43) Veröffentlichungstag der Anmeldung:
**25.02.2015  Patentblatt 2015/09**

(73) Patentinhaber: **HENSOLDT Sensors GmbH**
**82024 Taufkirchen (DE)**

(72) Erfinder:
• **BARTH, Jochen**
**85764 Oberschleißheim (DE)**
• **ROTH, Thomas**
**81373 München (DE)**
• **CZESLIK, Christian**
**85716 Unterschleißheim (DE)**

(74) Vertreter: **LifeTech IP**
**Spies & Behrndt Patentanwälte PartG mbB**
**Elsenheimerstraße 47a**
**80687 München (DE)**

(56) Entgegenhaltungen:
**EP-A2- 0 236 035       US-A1- 2004 178 463**
**US-A1- 2011 058 152    US-B2- 6 632 701**

**Beschreibung**

Die Erfindung betrifft eine optische Sensoranordnung gemäß dem Oberbegriff des Patentanspruchs 1.

Optische Sensoranordnungen werden z.B. für die Detektion von gepulsten Laserquellen verwendet, die eine Bedrohung ankündigen. Diese Laser können nach Wellenlänge und Bestrahlungsstärke klassifiziert werden:

- Beamrider-Waffensysteme, Near-Infrared-Region-(NIR-)Bereich, einige $mW/m^2$ bis einige $W/m^2$ und

- Target-Designatoren und Entfernungsmesser, 1064 nm, Strahlstärke bis einige $MW/cm2$.

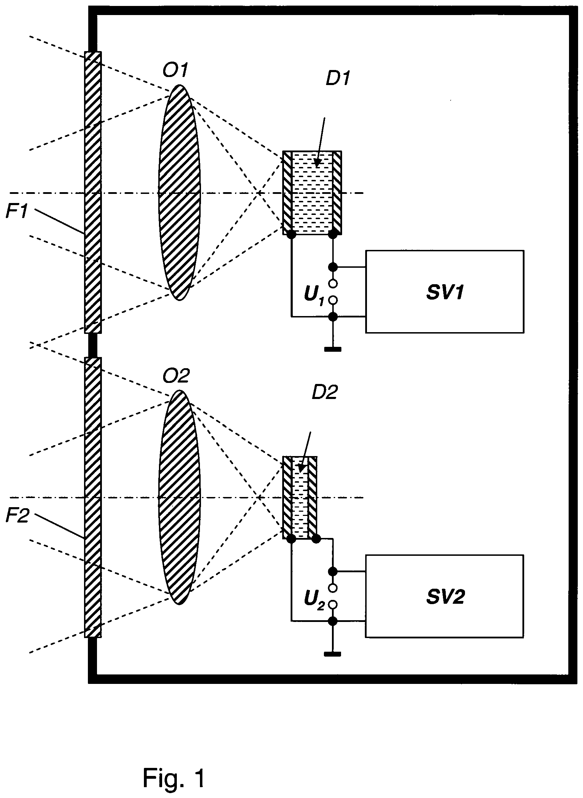

An Laserwarner, die eine Bestrahlungsstärke von einigen mW bis zu einigen MW detektieren sollen, wird die Anforderung gestellt, dass der Sensor (Detektor) nicht in Sättigung gehen darf, so dass der Dynamikbereich mindestens 6 Größenordnungen umfasst. Gleichzeitig erfordert die Erfassung gepulster Laserstrahlung eine hohe zeitliche Auflösung des Sensors. Diese Anforderungen können nicht mit einem einzigen aus dem Stand der Technik bekannten Sensor erfüllt werden, sondern man wählt üblicherweise Sensoranordnungen umfassend zwei nebeneinander angeordnete Sensoren S1, S2 mit jeweils zugeordneten Eintrittsfenstern F1, F2, wobei jeder einzelne Sensor jeweils nur einen Teil des gewünschten Dynamikbereichs erfasst (Fig. 1).

Wird der Sensor zusätzlich mit einer Optik ausgestattet, um die effektive Apertur des Sensors und den erfassten Bildwinkel zu optimieren, so wird jeder Sensor mit einer eigenen Optik O1, 02 ausgerüstet. Dies erhöht den Aufwand an Platz und Komponenten für die Auslegung eines Laserwarnsensors.

Aus US 5,428,215 A ist eine Sensoranordnung bekannt, bei welcher einzelne, parallel aufgebaute Kanäle zur Erfassung des Dynamikbereichs vorhanden sind. Die beschriebene Sensoranordnung ist auf dem kommerziellen Markt unter dem Namen HARLID® bekannt.

Aus US 6, 632, 701 A sind Sandwich-Dioden, die das Prinzip der "vertical color filter detector group" nutzen, bekannt. Diese Detektoren sind in der Kombination Si/InGaAs kommerziell verfügbar. Sie umfassen mehrere gestapelte Halbleiter-Schichten mit n- und p-Dotierung, wobei die sich daraus ergebenden jeweiligen p-n-Übergänge Photodioden bilden. Die einzelnen Photodioden arbeiten wellenlängenselektiv in unterschiedlichen Wellenlängenbereichen. Ein ähnliches Designprinzip offenbart die US 7,683,310 B1 in Form von hintereinander angeordneten Photodetektoren, wobei die einzelnen Detektoren für unterschiedliche Wellenlängen ausgelegt sind.

Die US2004/0178463 A1 zeigt eine Sensoranordnung aus einer Stapelung von Sensor-Dioden. Die einzelnen Sensor-Dioden operieren in unterschiedlichen Spektralbereichen. Zur Leistungsoptimierung der Sensoranordnung wird das Material der einzelnen Sensor-Dioden hinsichtlich ihrer Empfindlichkeit in verschiedenen Wellenlängenbereichen gezielt gewählt.

Die EP 0 236 035 A2 beschreibt einen Laserwarn-Sensor, bei dem in der Bildebene einer abbildenden Optik mehrere lineare Detektorarrays angeordnet sind, die jeweils einen streifenartigen Ausschnitt der Umgebung überwachen, wobei diese streifenartigen Ausschnitte jeweils unterschiedliche Entfernungen zu dem Sensor aufweisen.

Die US2011/0058152 A1 beschreibt eine Vorrichtung zur Bestimmung der Entfernung eines eine IR-Signatur emittierenden Objekts. Sie umfasst im Wesentlichen ein Sensor mit einer Eingangsoptik und einem elektrisch abstimmbaren Wellenlängenfilter, welcher vor einem Detektor angeordnet ist. Das Wellenlängenfilter kann z.B. ein auf Basis von Silizium hergestelltes Fabry-Perot-Filter sein.

Als nachteilig erweist sich bei den zuvor genannten Anordnungen, dass der Dynamikbereich eingeschränkt ist.

Aufgabe der Erfindung ist es, eine Sensoranordnung anzugeben, mit welcher die dynamische Empfindlichkeit unter Beibehaltung des spektralen Wellenlängenbereichs vergrößert wird.

Diese Aufgabe wird mit der Sensoranordnung gemäß den Merkmalen des geltenden Anspruchs 1 gelöst. Vorteilhafte Ausgestaltungen der Erfindung sind Gegenstand von Unteransprüchen.

Die erfindungsgemäße optische Sensoranordnung umfasst einen Sensor zur Detektion von elektromagnetischen Wellen und eine dem Sensor zugeordnete Apertur, wobei zur Detektion der durch die Apertur einfallenden elektromagnetischen Wellen mindestens zwei hintereinander angeordnete Sensoren vorhanden sind.

Die mindestens zwei hintereinander angeordneten Sensoren weisen übereinstimmende Spektralbereiche auf und decken denselben Bereich der zu beobachtenden Umgebung ab. Die Sensoren sind somit in übereinstimmenden Spektralbereichen empfindlich. Die Sensoren werden mit Strahlung gleicher Wellenlänge, allerdings unterschiedlicher Intensität beaufschlagt.

Die Erfindung sowie weitere Vorteile der Erfindung werden anhand von Figuren näher erläutert. Es zeigen:

Fig. 1   eine beispielhafte Sensoranordnung gemäß dem Stand der Technik,

Fig. 2   eine schematische Darstellung von gemäß der Erfindung zwei hintereinan-der angeordneten Dioden zusammen mit dem Intensitätsverlauf innerhalb der Dioden,

Fig. 3   eine Sensoranordnung gemäß der Erfindung.

EP 2 839 312 B1

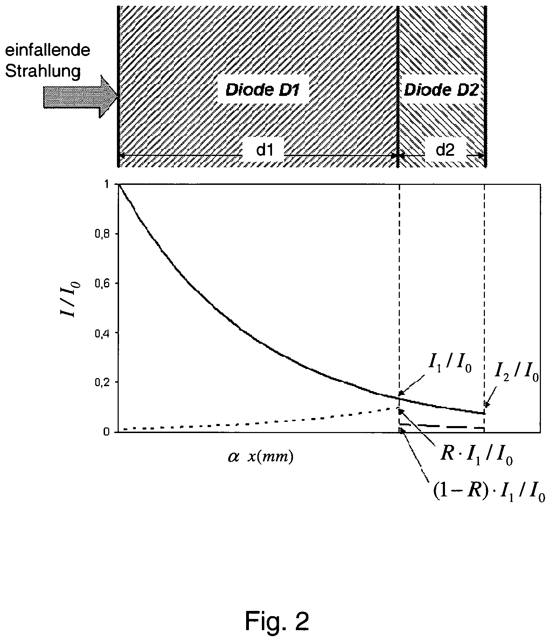

In der erfindungsgemäßen Sensoranordnung nutzen mindestens zwei hintereinander angeordnete Sensoren (oberer Teil in Fig. 2) eine gemeinsame Apertur und, falls in einer vorteilhaften Ausführung der Erfindung eine Optik erforderlich ist, auch eine gemeinsame Optik. In der Bildebene dieser Optik befindet sich eine erste Diode D1, die die einfallende Strahlung in einen elektrischen Photostrom umwandelt. Diese Diode wird so ausgelegt, dass die empfindliche Schicht (p-n Übergang) eine möglichst große Dicke aufweist. Dadurch wird in dieser Schicht die überwiegende Zahl der eintreffenden Photonen absorbiert und, entsprechend dem Quantenwirkungsgrad, in Elektron-Loch-Paare gewandelt. Damit weist D1 eine große Empfindlichkeit auf, wird aber gleichzeitig als effektives Dämpfungsfilter für die dahinter angeordnete zweite Diode D2 genutzt, die damit eine geringe Empfindlichkeit besitzt.

Dies soll an einem Rechenbeispiel verdeutlicht werden, bei welchem mit beispielhaft zwei Dioden ein Dynamikbereich von 6 Größenordnungen abgedeckt wird, wobei jede Diode einen Dynamikbereich von 3 Größenordnungen aufweist. Im Ergebnis sollen zudem die in den jeweiligen p-n Schichten absorbierten Intensitäten im Verhältnis von 1:1000 stehen.

Es gilt das Absorptionsgesetz $I(x) = I_0 \cdot e^{-\alpha \cdot x}$, wobei I die Intensität in der Tiefe x der Diode D1 bezeichnet, durch deren Oberfläche die Strahlung $I_0$ tritt, und $\alpha$ ist der Absorptionskoeffizient der Diode D1. Im unteren Teil der Fig. 2 ist der Intensitätsverlauf innerhalb der Dioden D1, D2 mit einer durchgezogenen Linie skizziert.

Als Diodenmaterial wird beispielhaft Silizium mit einem Absorptionskoeffizienten im nahen IR Spektralbereich von 100 cm$^{-1}$ angenommen. Um 99% der durch die Dioden-Oberfläche tretenden Intensität in der ersten Diode D1 zu absorbieren, wird die Dicke d1 der Diode zu 0.46 mm gewählt:

$$I_1 \quad = \quad I_0 \cdot e^{-4.6} = 0.01 \cdot I_0 \quad \Rightarrow \quad S_{D1} \propto I_0 - I_1 = 0.99 \cdot I_0 \quad .$$

$S_{D1}$ bezeichnet das Ausgangssignal der Diode D1, das zu der absorbierten Intensität proportional ist. Um das gewünschte Verhältnis der absorbierten Intensitäten $(I_0-I_1):(I_1-I_2)$ zu erreichen, wird die Dicke d2 der Diode D2 auf 0.01 mm festgesetzt, unter Vernachlässigung der Absorption in den Kontaktschichten der Dioden D1, D2:

$$I_2 \quad = \quad I_0 \cdot e^{-4.7} = 0.009 \cdot I_0 \quad \Rightarrow \quad S_{D2} \propto I_1 - I_2 = 0.001 \cdot I_0 \quad \Rightarrow \quad S_{D1} : S_{D2} \approx 1000 : 1$$

In diesem Beispiel muss die Dicke d1 der ersten Diode D1 sehr groß gewählt werden, um 99% der Intensität zu absorbieren, da der Absorptionskoeffizient von Silizium im nahen Infraroten relativ niedrig ist.

In einer vorteilhaften Ausprägung der Erfindung ist deshalb zwischen den Dioden D1, D2 eine teilverspiegelte Schicht vorgesehen. Zweckmäßig ist diese Schicht auf der Rückseite der IR-empfindlichen Si-Diode D1 aufgebracht, so dass die reflektierte Strahlung die Diodenschicht zwei mal durchsetzt; dann kann man die Dicke der Diode verringern, ohne den Anteil der absorbierten Strahlung zu verändern. Damit wird ein Teil der auf den Strahlteilerspiegel einfallenden Strahlung entsprechend dem Reflexionskoeffizienten R reflektiert (gepunktete Linie in Fig. 2 unterer Teil), und ein Teil entsprechend (1-R) transmittiert, wobei die interne Absorption innerhalb der Strahlteilerschicht vernachlässigbar ist (gestrichelte Linie in Fig. 2 unterer Teil).

Für diesen Fall lässt sich das obige Rechenbeispiel wie folgt darstellen. Um nahezu 99% der durch die Dioden-Oberfläche tretenden Intensität in der ersten Diode D1 zu absorbieren, wird die Dicke d1 der Dioden D1 zu $d_1=0.23$ mm gewählt, und die Reflektanz des Strahlteilers zu R=0,90:

$$I_1 \quad = \quad I_0 \cdot e^{-\alpha \cdot d_1} = 0.1 \cdot I_0$$

$$S_{D1} \propto \quad I_0 - I_1 + R \cdot I_1 \cdot \left(1 - e^{-\alpha \cdot d_1}\right) = I_0 - I_1 \cdot \left(R \cdot \left(1 - e^{-\alpha \cdot d_1}\right) - 1\right)$$
$$= I_0 \cdot \left(1 - e^{-\alpha \cdot d_1} + R \cdot e^{-\alpha \cdot d_1} - R \cdot e^{-2 \cdot \alpha \cdot d_1}\right) \quad = \quad 0.98 \cdot I_0$$

Um das gewünschte Verhältnis der absorbierten Intensitäten zu erreichen, wird die Dicke d2 von D2 wieder zu 0.01 mm gesetzt:

$$I_2 \quad = \quad I_1 \cdot \left(1 - R\right) \cdot e^{-\alpha \cdot d_2} = I_0 \cdot \left(1 - R\right) \cdot e^{-\alpha \cdot (d_1 + d_2)} = 0.009 \cdot I_0$$

$$S_{D2} \propto \quad I_1 \cdot \left(1 - R\right) - I_1 \cdot \left(1 - R\right) \cdot e^{-\alpha \cdot d_2} = I_0 \cdot \left(1 - R\right) \cdot \left(e^{-\alpha \cdot d_1} - e^{-\alpha \cdot (d_1 + d_2)}\right) = 0.001 \cdot I_0$$

$$S_{D1} : S_{D2} \approx 1000:1$$

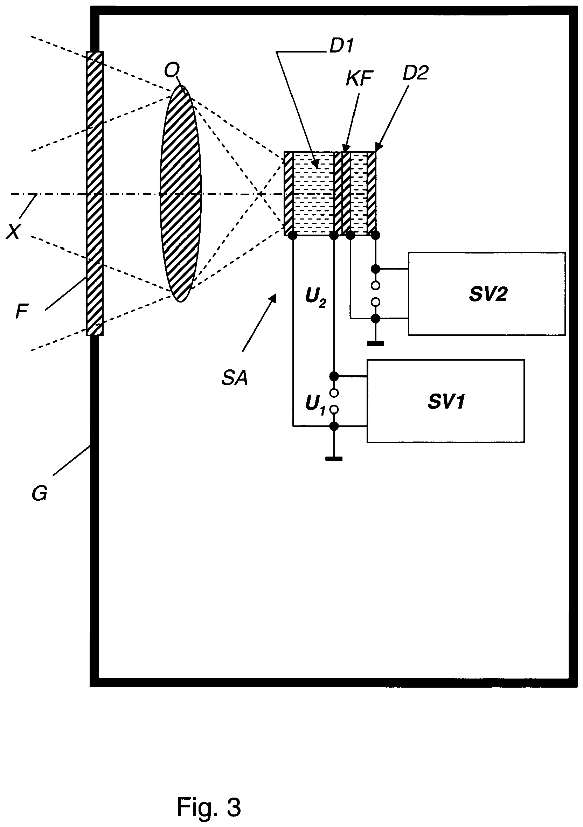

Fig. 3 zeigt eine erfindungsgemäße Sensoranordnung. Die Sensoranordnung SA ist in einem Gehäuse G mit einem Fenster F angeordnet. Durch das Fenster F können die elektromagnetischen Wellen auf die Sensoranordnung SA treffen. Die Sensoranordnung SA ist gebildet aus einer ersten Diode D1 und einer zweiten Diode 2, wobei die Diode D2 bezogen auf die Achse X hinter der Diode D1 angeordnet ist. Jede Diode D1, D2 weist Kontaktanschlüsse $K_{11}$, $K_{12}$, $K_{21}$, $K_{22}$ auf, mit welchen sie jeweils mit einer Signalverarbeitung SV1, SV2 verbunden sind.

Diode D1 dient dabei als Detektor für große Empfindlichkeit, Diode D2 als Detektor für geringe Empfindlichkeit. Beide Dioden sind für denselben operativen Wellenlängenbereich ausgelegt.

Zweckmäßig ist senkrecht zur Achse x eine Optik O vorhanden, welche zwischen dem aus Diode D1 und Diode D2 gebildeten Stapel und dem Fenster F angeordnet ist. Zweckmäßig ist der aus Diode D1 und Diode D2 gebildete Stapel so angeordnet, dass die Diode D1 in der Bildebene der Optik O positioniert ist.

Nicht dargestellt ist eine zwischen Diode D1 und Diode D2 vorgesehene teilverspiegelte Schicht. Ein solcher teildurchlässiger Strahlteilerspiegel kann, sofern er aus einer metallischen Schicht hergestellt ist, gleichzeitig zur Kontaktierung der aneinandergrenzenden Kontaktflächen KF der beiden Dioden D1, D2 genutzt werden.

Selbstverständlich ist eine Kaskadierung auf mehr als zwei gestapelte Dioden zur weiteren Erhöhung des dynamischen Bereichs möglich, ebenso eine Übertragung auf andere Spektralbereiche.

Ein Vorteil der Erfindung ist, dass das Ausgangssignal beider als Detektoren wirkenden Dioden D1, D2 für die zu betrachtenden Laserquellen in derselben Größenordnung liegt. So können die Ausgangssignale mit im Wesentlichen gleichen Schaltungen zur Signalverarbeitung SV1, SV2 weiterverarbeitet werden. Die erfindungsgemäße Sensoranordnung spart zudem Platz und reduziert die Anzahl der benötigten optischen Komponenten.

**Patentansprüche**

1. Optische Sensoranordnung umfassend mehrere Sensoren (D1, D2) zur Detektion von elektromagnetischen Wellen und eine den Sensoren (D1, D2) zugeordnete gemeinsame Apertur, wobei zur Detektion der durch die Apertur einfallenden elektromagnetischen Wellen mindestens zwei hintereinander angeordnete Sensoren (D1, D2) vorhanden sind, wobei die hintereinander angeordneten Sensoren (D1,D2) in ihren operativen Spektralbereichen übereinstimmen, und wobei der - in Richtung auf die einfallende Strahlung gesehen - jeweils vorhergehende Sensor (D1) zur Erhöhung des Dynamikbereichs der Sensoranordnung in den übereinstimmenden Spektralbereichen der Sensoren ein Dämpfungsfilter für die dahinter angeordneten Sensoren (D2) bildet.

2. Sensoranordnung nach Anspruch 1,
   **dadurch gekennzeichnet, dass**
   zwischen den Sensoren (D1, D2) eine teilverspiegelte Schicht vorgesehen ist.

3. Sensoranordnung nach einem der vorangehenden Ansprüche,
   **dadurch gekennzeichnet, dass**
   die Sensoren (D1, D2) Dioden mit einem p-n- oder n-p-Übergang sind.

4. Sensoranordnung nach einem der vorangehenden Ansprüche,
   **dadurch gekennzeichnet, dass**
   die Sensoranordnung zusätzlich eine Optik (O) umfasst.

5. Sensoranordnung nach Anspruch 4,
   **dadurch gekennzeichnet, dass**
   einer der Sensoren (D1, D2) in der Bildebene der Optik (O) positioniert ist.

6. Sensoranordnung nach einem der vorangehende Ansprüche,
   **dadurch gekennzeichnet, dass**
   jeder Sensor (D1, D2) mit einer Anordnung zur Signalverarbeitung (SV1, SV2) verbunden ist.

**Claims**

1. Optical sensor arrangement comprising a plurality of sensors (D1, D2) for the detection of electromagnetic waves and a common aperture associated with the sensors (D1, D2), wherein at least two sensors (D1, D2) disposed in series are provided for the detection of the electromagnetic waves entering through the aperture, wherein the sensors disposed in series (D1,D2) coincide in their operational spectral regions, wherein the respectively preceding sensor (D1) - looking in the direction of the incident radiation - for increasing the dynamic range of the sensor arrangement in the coincident spectral regions of the sensors forms an attenuation filter for the downstream sensor (D2).

2. Sensor arrangement according to Claim 1,
**characterized in that**
a partly mirrored layer is provided between the sensors (D1, D2).

3. Sensor arrangement according to any one of the preceding claims, **characterized in that**
the sensors (D1, D2) are diodes with a p-n or n-p junction.

4. Sensor arrangement according to any one of the preceding claims, **characterized in that**
the sensor arrangement additionally comprises an optics (O).

5. Sensor arrangement according to Claim 4, **characterized in that** one of the sensors (D1, D2) is positioned in the image plane of the optics (O).

6. Sensor arrangement according to any one of the preceding claims, **characterized in that**
each sensor (D1, D2) is connected to an arrangement for signal processing (SV1, SV2).


**Revendications**

1. Arrangement de détection optique comprenant plusieurs capteurs (D1, D2) destinés à détecter des ondes électromagnétiques et une ouverture commune associée à l'un des capteurs (D1, D2), au moins deux capteurs (D1, D2) disposés l'un derrière l'autre étant présents pour la détection des ondes électromagnétiques incidentes à travers l'ouverture, les capteurs (D1, D2) disposés l'un derrière l'autre coïncidant dans leurs plages spectrales de fonctionnement, et le capteur (D1) respectivement placé en avant, dans la direction du rayonnement incident, formant un filtre d'atténuation pour les capteurs (D2) disposés derrière celui-ci en vue d'augmenter la plage dynamique de l'arrangement de détection dans les plages spectrales coïncidentes des capteurs.

2. Arrangement de détection selon la revendication 1, **caractérisé en ce qu'**une couche partiellement réfléchissante se trouve entre les capteurs (D1, D2).

3. Arrangement de détection selon l'une des revendications précédentes, **caractérisé en ce que** les capteurs (D1, D2) sont des diodes ayant une transition p-n ou n-p.

4. Arrangement de détection selon l'une des revendications précédentes, **caractérisé en ce que** l'arrangement de détection comporte en outre une optique (O).

5. Arrangement de détection selon la revendication 4, **caractérisé en ce que** l'un des capteurs (D1, D2) est positionné dans le plan d'image de l'optique (O).

6. Arrangement de détection selon l'une des revendications précédentes, **caractérisé en ce que** chaque capteur (D1, D2) est relié à un arrangement de traitement de signal (SV1, SV2).

Fig. 1

einfallende
Strahlung

Diode D1

Diode D2

d1

d2

$I/I_0$

$\alpha\ x(mm)$

$I_1/I_0$

$I_2/I_0$

$R\cdot I_1/I_0$

$(1-R)\cdot I_1/I_0$

Fig. 2

Fig. 3

**IN DER BESCHREIBUNG AUFGEFÜHRTE DOKUMENTE**

**In der Beschreibung aufgeführte Patentdokumente**

- US 5428215 A
- US 6632701 A
- US 7683310 B1
- US 20040178463 A1
- EP 0236035 A2
- US 20110058152 A1